**Europäisches Patentamt**

**European Patent Office**

**Office européen des brevets**

(19)

(11) Veröffentlichungsnummer: **0 070 420**
**B1**

(12)

# EUROPÄISCHE PATENTSCHRIFT

(45) Veröffentlichungstag der Patentschrift:
04.12.85

(51) Int. Cl.⁴: **B 60 K 41/22,** F 16 H 5/12

(21) Anmeldenummer: **82105673.6**

(22) Anmeldetag: **26.06.82**

(54) Schalteinrichtung für ein von einem Hydromotor angetriebenes lastschaltbares Zweigang-Getriebe, insbesondere für Mobilbagger.

(30) Priorität: 16.07.81 DE 3128108

(43) Veröffentlichungstag der Anmeldung:
26.01.83 Patentblatt 83/4

(45) Bekanntmachung des Hinweises auf die Patenterteilung:
04.12.85 Patentblatt 85/49

(84) Benannte Vertragsstaaten:
DE FR GB IT SE

(56) Entgegenhaltungen:
DE - A - 2 019 119
DE - A - 2 526 573
DE - A - 2 740 750
FR - A - 2 437 512

(73) Patentinhaber: Carl Hurth Maschinen- und
Zahnradfabrik GmbH & Co, Moosacher Strasse 36,
D-8000 München 40 (DE)

(72) Erfinder: Hübl, Julius, Hansjakobstrasse 29,
D-8000 München 80 (DE)
Erfinder: Eichinger, Johann, Edelweissstrasse 15,
D-8011 Vaterstetten (DE)

## Beschreibung

Die Erfindung betrifft eine Schalteinrichtung für ein von einem Hydromotor angetriebenes lastschaltbares Zweigang-Getriebe, wie es im Oberbegriff des Hauptanspruches beschrieben ist.

Die heute gebauten Mobilbagger haben im allgemeinen hydrostatischen Antrieb mit einem im Stillstand schaltbaren Zweigang-Getriebe für Gelände- und für Straßenfahrt. Der Verbrennungsmotor mit der Hydro-Verstellpumpe befindet sich im Oberwagen. Von dort führen Leitungen durch den Drehzapfen zum Hydro-Verstellmotor am Getriebe im Unterwagen (DE-B-1 634 871).

Das nur im Stillstand schaltbare Getriebe wird vielfach als nachteilig angesehen, weil das zum Schalten erforderliche Anhalten die Umschlagleistung des Mobilbaggers vermindert. Der Gedanke, ein lastschaltbares Getriebe zu verwenden, liegt nahe. Solche Getriebe mit hydraulisch beaufschlagten Lamellenkupplungen sind bekannt. Die Versorgung des Getriebes mit dem erforderlichen Drucköl für die Lamellenkupplungen und mit dem Schmieröl für die Lager, die Zahnräder usw. bringt jedoch gerade beim Anwendungsfall Mobilbagger Probleme mit sich.

Eine getrennt vom Getriebe angeordnete, direkt vom Verbrennungsmotor angetriebene Ölpumpe läßt sich nur im Oberwagen unterbringen. Dabei sind aufwendige Öldurchführungen durch den Drehzapfen zwischen Ober- und Unterwagen erforderlich für Hin- und Rückleitungen; außerdem entstehen lange Ölleitungen, was insbesondere für die Ansaugseite der Ölpumpe ungünstig ist. Dieselben Nachteile ergeben sich, wenn für die Hydrostatik und für das Getriebe ein gemeinsamer Ölhaushalt vorgesehen wird, d. h. wenn die Hydro-Verstellpumpe auch für die Ölversorgung des Getriebes herangezogen wird. Als zusätzlicher Nachteil ist dabei noch die erhöhte Verschmutzung des Hydrauliköls zu nennen.

Eine am Getriebe angebrachte, vom Hydromotor angetriebene Ölpumpe bringt erst bei einer bestimmten Drehzahl einen ausreichenden Druck und die erforderliche Fördermenge. Die jeweilige Kupplung kann erst bei einer bestimmten Antriebsdrehzahl schließen und muß dabei auch Reibarbeit übernehmen. Gerade zu diesem Zeitpunkt steht wegen der niederen Drehzahl noch wenig Öl für die Wärmeabfuhr zur Verfügung. Die Vorteile des hydrostatischen Antriebes werden nicht mehr voll genutzt.

Von diesen Überlegungen ausgehend liegt der Erfindung die Aufgabe zugrunde, ein unter Last schaltbares Zweigang-Getriebe insbesondere für einen Mobilbagger oder eine ähnliche Baumaschine bzw. eine Schalteinrichtung für ein solches Getriebe zu entwickeln, die einfach ist im Aufbau und in der Bedienung und die Vorteile des hydrostatischen Antriebes nicht einschränkt.

Erfindungsgemäß wird diese Aufgabe gelöst mit einer Schalteinrichtung, die die kennzeichnenden Merkmale des Hauptanspruchs aufweist. Die Federspeicherkupplung ermöglicht ein Anfahren auch dann, wenn die Ölpumpe noch keinen zum Schalten der Kupplungen ausreichenden Öldruck bringt. Ein vom Baggerführer zu betätigendes Schaltventil bewirkt die Druckölzufuhr im Sinne des Einschaltens zur Kupplung für den 2. Gang und gleichzeitig im Sinne des Ausschaltens zur Federspeicherkupplung. Da das Einschalten des 2. Ganges und das Ausschalten des 1. Ganges zur gleichen Zeit erfolgt, ist nur eine gemeinsame Ölleitung vom Schaltventil zu den beiden Kupplungen erforderlich. Da das Einschalten des 1. Ganges immer selbsttätig erfolgt, auch wenn der Baggerführer das Schaltventil entsprechend umschaltet und so die Druckölzufuhr zu den Kupplungen unterbrochen wird, sind keine weiteren Ölleitungen zu den Kupplungen erforderlich. Von noch größerem Vorteil ist, daß zur Betätigung des Schaltventils — wenn diese mit Druckluft oder Drucköl erfolgt — nur eine Leitung vom Fahrerhaus im Oberwagen zum Getriebe im Unterwagen geführt werden muß. Selbstverständlich kann das Schaltventil auch elektrisch betätigt werden. In der FR-A 2 437 512 ist ein Hydraulikschema für einen Bagger gezeigt mit nur zwei durch den Drehzapfen geführten Hydraulikleitungen. Hierbei handelt es sich aber nur um die Saug- und die Druckleitung der vom Verbrennungsmotor angetriebenen Pumpe. Da kein Schaltgetriebe für den Fahrantrieb vorhanden respektive erwähnt ist, sind auch keine Steuerleitungen vom Fahrerstand im Oberwagen durch den Drehzapfen hindurch zum Unterwagen vorhanden bzw. dargestellt.

Wenn noch kein ausreichender Öldruck zum Einschalten des 2. Ganges vorhanden ist, verhindert ein federbelastetes Abschaltventil bei eingeschaltetem 1. Gang das Umschalten in den 2. Gang. Andererseits bewirkt dieses Abschaltventil ein selbsttätiges Einschalten der Federspeicherkupplung, wenn bei eingeschaltetem 2. Gang der Öldruck unter den für die Kupplungsbetätigung erforderlichen Wert sinkt. Das Zurückschalten in den 1. Gang beim Absinken der Drehzahl bzw. beim Fahren über längere Zeit im niederen Drehzahlbereich ist erforderlich, um die Kupplung für den 2. Gang vor langzeitiger Rutscharbeit und somit vor übermäßiger Wärmeentwicklung und Zerstörung zu schützen.

Das Abschaltventil wird zweckmäßigerweise gemäß Anspruch 2 in seinen Endlagen mittels Federrasten arretiert. Diese Rasten bewirken eine Hysterese des Abschaltventils und gewährleisten eine durchgehende Kolbenbewegung von einer Endlage in die andere ohne Zwischenstellung.

Ein weiches Einschalten wird dadurch erreicht, daß die vorher eingeschaltete Kupplung rasch öffnet und die einzuschaltende Kupplung langsam schließt. Somit tritt keine oder nur eine geringe Überdeckung der jeweils eingeschalteten Kupplungen auf.

Vorteilhafterweise werden das Abschaltventil und das Regelventil hinter dem Schaltventil angeordnet (Anspruch 4). Sie bleiben dann bei eingeschaltetem 1. Gang unbeaufschlagt. In diesem Fall kann das von der Ölpumpe geförderte Öl ganz dem Schmierölkreislauf zugeführt werden (Anspruch 5).

Um ein Herunterschalten in den 1. Gang bei hoher Drehzahl zu verhindern (Übertourungsschutz), soll das Schaltventil in Schaltstellung 2. Gang abhängig von der Pumpendrehzahl verriegelt sein (Anspruch 6).

Die Erfindung wird nachstehend anhand mehrerer in den Figuren 1 bis 4 dargestellten Ausführungsbeispielen beschrieben. Es zeigt

Figur 1 eine Schalteinrichtung nach der Erfindung für ein zweigängiges Stirnradgetriebe,

Figur 2 eine vereinfachte Darstellung des Regelventiles,

Figur 3 die Schalteinrichtung nach Figur 1 in Verbindung mit einem zweigängigen Planetengetriebe,

Figur 4 eine Variante der erfindungsgemäßen Schalteinrichtung.

Ein Hydromotor 1 und ein unter Last schaltbares Getriebe 2 sind mittels einer manuell betätigbaren Trennkupplung 3 miteinander kraftschlüssig verbunden. Die Ölversorgung des Hydromotors 1 ist für die Erfindung ohne Bedeutung und ist deshalb nicht dargestellt. Dasselbe gilt auch für das Gehäuse usw. des Getriebes 2, von dem nur die rotierenden Teile gezeigt sind. Auf der Antriebswelle 4 des Getriebes 2 sind nebeneinander ein Zahnrad 5, eine als Lamellenkupplung ausgebildete Reibungskupplung 6 mit einem Zahnrad 7 und eine Öleinführung 8 für Schmieröl sowie für Drucköl zur Reibungskupplung 6 angeordnet. Außerdem treibt die Antriebswelle 4 eine Ölpumpe 10 an, auf die noch eingegangen wird.

Parallel zur Antriebswelle 4 liegt eine Abtriebswelle 11, auf der nebeneinander eine als Federspeicherkupplung ausgebildete Reibungskupplung 12 mit einem Zahnrad 13, ein Zahnrad 14 und eine Öleinführung 15 für Schmieröl sowie für Drucköl zur Reibungskupplung 12 angeordnet sind. An ihren beiden Enden weist die Abtriebswelle 11 Flansche 16, 17 auf zum Anschluß von nicht dargestellten, zu den Antriebsachsen führenden Gelenkwellen. Einer dieser Flansche 17 ist mit einer Haltbremse 18 verbunden, die als Backenbremse ausgebildet ist.

Die Zahnräder 5 und 13 stehen miteinander in Eingriff und bilden das Räderpaar für den 1. Gang (bei eingeschalteter Reibungskupplung 12). Auch die Zahnräder 7 und 14 stehen miteinander in Eingriff und bilden das Räderpaar für den 2. Gang (bei eingeschalteter Reibungskupplung 6).

Die Ölpumpe 10 saugt aus einem Ölbehälter 20 Öl über eine Leitung 21 mit einem Filter 22 an. Druckseitig ist die Ölpumpe 10 über Leitungen 23, 24 mit einem Regelventil 25 bzw. über die Leitung 23 und eine Leitung 26 mit einem sogenannten Abschaltventil 27 verbunden. In der Leitung 23 sind ein zweiter Filter 20 sowie eine Rückführung 23' mit einem Überdruckventil 29 angeordnet. Damit wird die Pumpe 10 vor einer Überlastung bei sehr kaltem Öl oder bei verschmutztem Filter 28 geschützt.

Das Regelventil 25 ist über eine Leitung 31 mit einem Schaltventil 30 verbunden. Dieses Schaltventil 30 wird sowohl von einem vom Fahrerhaus aus über eine Leitung 46 hydraulisch oder pneumatisch beaufschlagbaren Schaltzylinder 34 als auch von dem sogenannten Abschaltventil 27 gesteuert. Vom Schaltventil 30 führt eine Leitung 35 zu den Öleinführungen 8, 15, die über Bohrungen 36, 37 in den Wellen 4, 11 mit den Kupplungen verbunden sind. Von der Leitung 35 zweigt eine Leitung 38 ab, die über eine Drossel 39 zum Regelventil 25 führt.

Das Regelventil 25 ist über eine weitere, für das Schmieröl bestimmte Leitung 40 ebenfalls mit den Öleinführungen 8, 15 verbunden, von denen Bohrungen 41, 42 in den Wellen 4, 11 zu den zu schmierenden Getriebeteilen führen. Von der Leitung 40 führt eine mit einem Überdruckventil 44 ausgestattete abzweigende Leitung 43 zum Ölbehälter 20. Mit dieser Einrichtung wird der Schmieröldruck auf einem bestimmten Wert begrenzt.

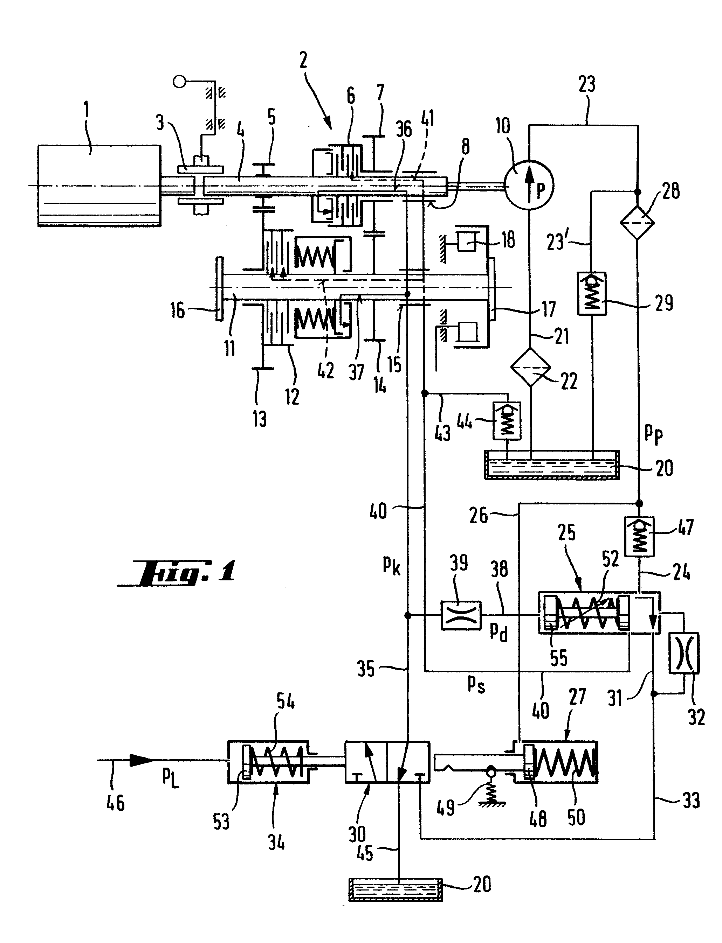

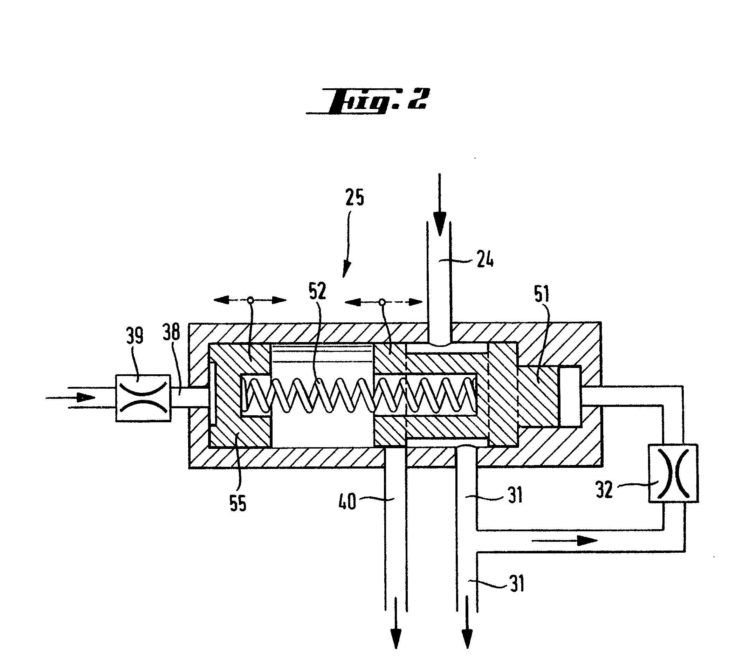

Die Wirkungsweise der Schalteinrichtung ist wie folgt. Beim Anfahren ist die als Federspeicherkupplung ausgebildete Reibungskupplung 12 eingeschaltet, der Antrieb erfolgt somit über die Zahnräder 5, 13 im 1. Gang. Alle Leitungen sind zunächst drucklos, die Zylinder der beiden Reibungskupplungen 6, 12 sind über die Leitung 35, das Schaltventil 30 und eine Leitung 45 entleert. Auch die Leitung 46 und damit der Schaltzylinder 34 sind nicht beaufschlagt, das Schaltventil 30 steht in der in Figur 1 dargestellten »Aus«-Stellung. Das von der Pumpe 10 geförderte Öl strömt zunächst über die Leitungen 23 und 26 zum sogenannten Abschaltventil 27, bis das Druckventil 47 öffnet. Vorher hat sich im sogenannten Abschaltventil 27 ein Druck aufgebaut, der einen Kolben 48 nach Überwinden der Haltekraft einer Federraste 49 von der gezeichneten, das Schaltventil 30 verriegelnden ersten Endlage in eine das Schaltventil 30 für eine evtl. Betätigung freigebende zweite Endlage bewegt. Wenn das Druckventil 47 öffnet, strömt Öl über die Leitungen 24, 31 und — da die Leitung 33 im Schaltventil 30 gesperrt ist — über die Drosselstelle 32 zum Regelventil 25, wo sich hinter dem Kolben 51 (Figur 2) ein Druck aufbaut, der den Kolben 51 gegen eine Feder 52 im Sinne der Figur 2 nach links bewegt. Damit wird die vom Kolben 51 bisher gesperrte Leitung 40 zumindest teilweise geöffnet, so daß Öl zur Schmierung des Getriebes 2 durch die Leitung 40 und die Bohrungen 41, 42 strömen kann. Der erwünschte Schmierdruck $P_s$ ist am Überdruckventil 44 eingestellt.

Hat das sogenannte Abschaltventil 27 bei ausreichendem Druck das Schaltventil 30 freigegeben, kann der 2. Gang eingeschaltet werden. Über die Leitung 46 wird der Schaltzylinder 34 mit Druckluft oder Drucköl beaufschlagt und mit diesem Druck $p_L$ ein Kolben 53 im Sinne der Figur 1 nach rechts bewegt, wodurch das Schaltventil 30 umschaltet. Wird der Schaltzylinder 34 vor Freigabe des Schaltventils 30 beaufschlagt, bleibt das Schaltventil 30 in der »Aus«-Stellung, weil die Kraft der Feder 50 des sogenannten Abschaltventils 27 stärker ist als der Druck $p_L$. Wird also das Schaltventil 30 in die »Ein«-Stellung gebracht, so strömt Öl von der bisher gesperrten Leitung 33 über die Leitung 35 und die Bohrungen 36, 37 in die Zylinder der beiden Kupplungen 6, 12. Nach dem Füllen der Zylinder und dem Anlegen des Kolbens der Kupplung 6 an die Lamellen baut sich in den Leitungen 31, 33, 35, den Bohrungen 36, 37 und den Zylindern der erforderliche Kupplungs-Schaltdruck $p_k$ und in der Leitung 38 zwischen der Drossel 39 und einem Kolben 55 des Regelventils 25 ein Differenzdruck $p_d$ auf: die Kupplung 6 für den 2. Gang schaltet ein und die Kupplung 12 für den 1. Gang schaltet aus. Die Zeit, die zum Aufbau des Druckes $p_k$ bzw. zum Schalten benötigt wird, ist weitgehend abhängig vom Widerstand der Drossel 39. Nach dem Schalten stellt sich ein Gleichgewicht zwischen $p_d$ und $p_k$ ein.

Durch die Drosselstelle 32 und die Drossel 39 wirken sich kurzzeitige Schwankungen des Druckes $p_p$ des von der Pumpe 10 geförderten Öls nicht auf den Druck $p_k$ aus. Sinkt jedoch der Druck $p_p$ unter einen bestimmten Wert, bei dem die Kupplung 6 für den 2. Gang rutschen würde, dann schaltet die Feder 50 des sogenannten Abschaltventils 27 das Schaltventil 30 und den Kolben 53 des Schaltzylinders 34 gegen den am Kolben anstehenden Druck $p_L$ aus der Leitung 46 zurück in die »Aus«-Stellung. Damit bricht der Druck $p_k$ auf den Wert Null zusammen: die Federspeicherkupplung 12 für den 1. Gang schaltet ein und die Kupplung 6 für den 2. Gang schaltet aus. Sobald der Druck $p_p$ wieder so weit ansteigt, daß das Abschaltventil 27 freigibt, wird der 2. Gang selbsttätig wieder eingeschaltet, sofern der Kolben 53 noch mit dem Druck $p_L$ beaufschlagt ist.

Soll vom 2. wieder in den 1. Gang geschaltet werden, wird der Druck $p_L$ vom Kolben 53 weggenommen. Eine Feder 54 im Schaltzylinder 34 drückt den Kolben 53 und das Schaltventil in die »Aus«-Stellung. Damit bricht der Druck $p_k$ zusammen, die Kupplung 12 für den 1. Gang schaltet ein und die Kupplung 6 für den 2. Gang schaltet aus.

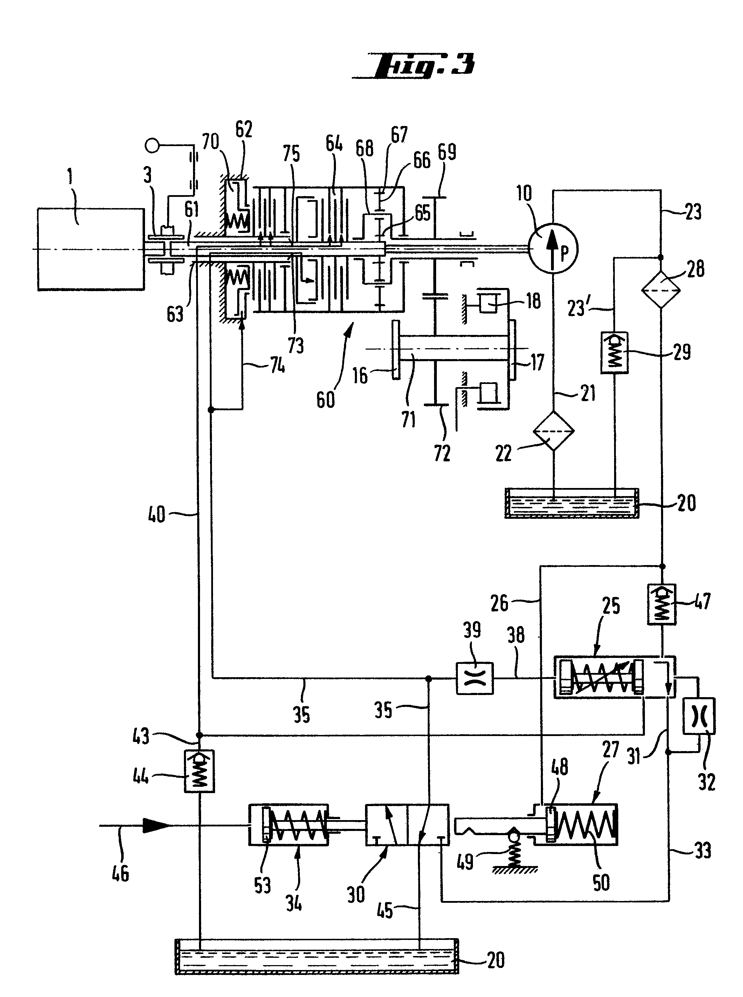

Diese Art der Schalteinrichtung ist nicht nur bei Stirnradgetrieben anwendbar, sondern auch bei Planetengetrieben. Ein Beispiel ist in Figur 3 dargestellt, wobei alle der Figur 1 entsprechenden Teile mit denselben Bezugsnummern versehen sind. Der Hydromotor 1 ist über die Trennkupplung 3 mit einem unter Last schaltbaren Planetengetriebe 60 kraftschlüssig verbunden, von dem nur die rotierenden Teile und ein Abschnitt des Gehäuses gezeigt sind. Auf der Antriebswelle 61 des Getriebes 60 sind nebeneinander eine mit dem Gehäuse 62 verbundene Öleinführung 63, eine Reibungskupplung 64 und das Sonnenrad 65 eines Planetentriebes 65, 66, 67 angeordnet. Ein die Planetenräder 66 tragender Planetenträger 68 umgibt konzentrisch die Antriebswelle 61 und trägt außerdem ein Zahnrad 69. Die Antriebswelle 61 treibt die Ölpumpe 10 an.

Parallel zur Antriebswelle 61 liegt eine Abtriebswelle 71, die ein Zahnrad 72 trägt. An ihren beiden Enden weist die Abtriebswelle 71 Flansche 16, 17 auf, von denen einer 17 wieder mit einer als Backenbremse ausgebildeten Haltebremse 18 ausgebildet ist.

Eine als Federspeicherkupplung ausgebildete Reibungskupplung 70 verbindet den Zahnkranz 67 mit dem Gehäuse 62, d. h. hält ihn fest. Im 1. Gang läuft dann der Kraftfluß von der Antriebswelle 61 über das Sonnenrad 65, die Planetenräder 66 und den Planetenträger 68 zum Zahnrad 69, dann weiter über das Zahnrad 72 zur Abtriebswelle 71. Bei gelöster Kupplung 70 verbindet die Kupplung 64 den Zahnkranz 67 mit der Antriebswelle 61. Im 2. Gang dreht dann das ganze Planetengetriebe 65, 66, 67 einschließlich dem Planetenträger 68 als Block mit der Drehzahl der Antriebswelle 61. Das Drucköl zum Einschalten der Kupplung 64 für den 2. Gang bzw. zum Ausschalten der Kupplung 70 für den 1. Gang wird den Kupplungen über die Öleinführung 63 und eine Bohrung 73 in der Antriebswelle 61 bzw. über eine Leitung 74 zugeführt. Über eine weitere Bohrung 75 in der Antriebswelle wird Schmieröl an die zu schmierenden Getriebeteile herangeführt.

Der Aufbau und die Wirkungsweise der Schalteinrichtung entsprechen ganz der mit der Figur 1 beschriebenen Einrichtung und braucht hier nicht wiederholt zu werden.

Ein gewisser Nachteil der vorbeschriebenen Schalteinrichtung kann u. U. darin bestehen, daß zum Zeitpunkt des Anfahrens noch kein Schmieröl gefördert wird und die Getriebeteile zunächst nur durch Tauchschmierung geschmiert werden.

Mitunter wird auch das gleichzeitig ablaufende Einschalten der bisher geöffneten und Öffnen der bisher eingeschalteten Kupplung als störend empfunden, weil u. U. beide Kupplungen für eine kurze Zeit gleichzeitig eingeschaltet sein können, also eine unerwünschte Überdeckung der Einschaltzustände auftritt.

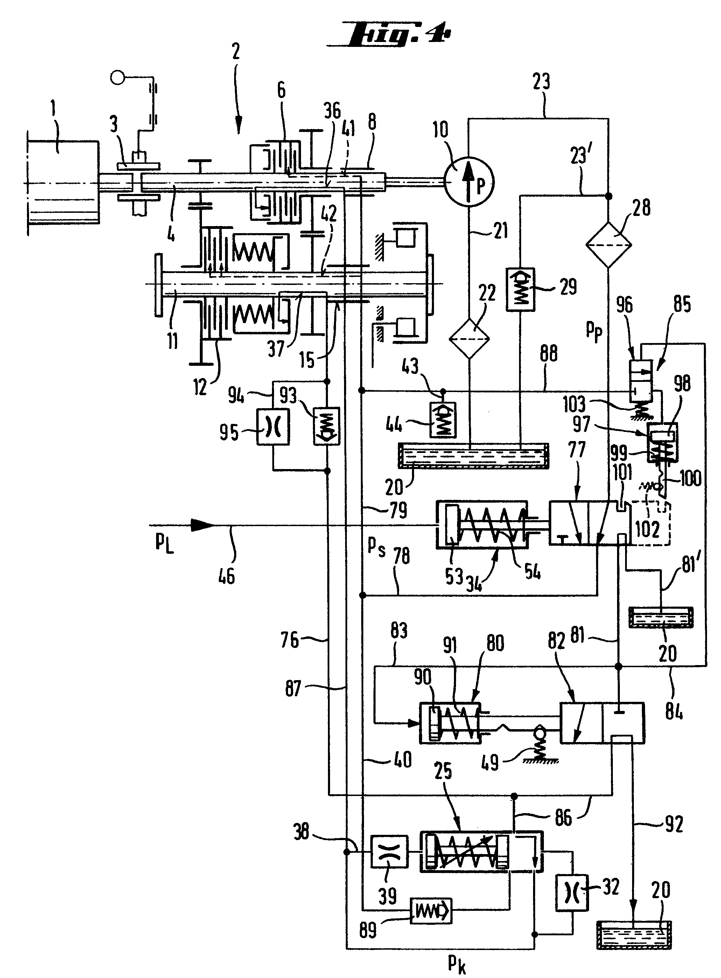

Beide Nachteile werden bei der in Figur 4 dargestellten Schalteinrichtung vermieden: den Getriebeteilen wird von Anfang an von der Pumpe 10 gefördertes Schmieröl zugeführt und eine Überdeckung der Einschaltzustände nicht oder nur in ganz geringem, vertretbarem Maße eintritt. Die Anordnung von Motor 1, Getriebe 2 und Ölpumpe 10 sowie der Aufbau des Getriebes 2 entsprechen ganz der Figur 1, lediglich das Drucköl zum Ausschalten der Kupplung 12 für den 1. Gang wird der Bohrung 37 über eine eigene Leitung 76 zugeführt.

Die Ölpumpe 10 saugt aus dem Ölbehälter 20 Öl über die Leitung 21 mit dem Filter 22 und fördert es über die Leitung 23, in der der zweite Filter 28 sowie die Rückführung 23' mit dem Überdruckventil 29 angeordnet sind, zu einem Schaltventil 77. Das Schaltventil 77 ist über für das Schmieröl bestimmte Leitungen 78, 79 mit den Öleinführungen 8, 15 verbunden, von denen die Bohrungen 41, 42 in den Wellen 4, 11 zu den zu schmierenden Getriebeteilen führen.

Eine weitere Leitung 81 führt vom Schaltventil 77 zu einem sogenannten Abschaltventil 80, das mit einem Zweiwege-Ventil 82 kombiniert ist. Von der Leitung 81 zweigen eine weitere zum Schaltventil 77 führende Leitung 83 sowie eine Leitung 84 ab, die zu einer noch zu beschreibenden Verriegelungseinrichtung 85 führt. Die Leitung 76 verbindet das Zweiwege-Ventil 82 mit der Öleinführung 15 und weiter über die Bohrung 37 mit der Kupplung 12 für den 1. Gang. Von der Leitung 76 zweigt eine Leitung 86 zum Regelventil 25 ab, von dem eine Leitung 87 zur Öleinführung 8 führt und über die Bohrung 36 die Verbindung mit der Kupplung 6 für den 2. Gang herstellt. Die ebenfalls vom Regelventil 25 abgehende, für das Schmieröl bestimmte Leitung 40, die mit einem Rückschlagventil 89 ausgestattet ist, mündet in die Leitung 79. Von der Leitung 87 zweigt noch die Leitung 38 ab, die über die Drossel 39 zum Regelventil 25 führt.

Die für das Schmieröl bestimmte Leitung 79 ist noch über eine Leitung 88, von der die mit dem Überdruckventil 44 ausgestattete Leitung 43 zum Ölbehälter 20 abzweigt, an die Verriegelungseinrichtung 85 angeschlossen.

Die Wirkungsweise der Schalteinrichtung ist wie folgt. Beim Anfahren ist die als Federspeicherkupplung ausgebildete Reibungskupplung 12 eingeschaltet, angefahren wird also immer im 1. Gang. Alle Leitungen, mit Ausnahme der Schmierölleitungen, sind drucklos. Die Ventile sind nicht beaufschlagt. Das von der Pumpe 10 geförderte Öl strömt über die Leitung 23 durch das Schaltventil 77 und über die Leitungen 78, 79 zu den Öleinführungen 8, 15. Der erwünschte Schmierdruck ist am Überdruckventil 44 eingestellt, das bei zu hohem Druck öffnet und Öl in den Ölbehälter 20 abfließen läßt. Dank des Rückschlagventils 89 kann kein Schmieröl über die Leitung 40 zum Regelventil 25 fließen.

Soll nun in den 2. Gang geschaltet werden, so wird das Schaltventil 77 von dem vom Fahrerhaus aus über die Leitung 46 pneumatisch oder hydraulisch beaufschlagbaren Schaltzylinder 34 betätigt: der Kolben 53 schaltet das Schaltventil 77 von der gezeichneten »Aus«-Stellung in die »Ein«-Stellung. Das von der Pumpe 10 geförderte Öl gelangt jetzt über die Leitungen 81, 83 zum sogenannten Abschaltventil 80, wo sich ein Druck aufbaut, der einen Kolben 90 nach Überwinden der Kraft einer Feder 91 und der Haltekraft der Federraste 49 von der gezeichneten ersten Endlage in eine die Leitung 81 mit der Leitung 86 und damit mit dem Regelventil 25 verbindende zweite Endlage bewirkt. Solange der am Kolben 90 anstehende Druck die Feder 91 und die Federraste 49 nicht überwinden kann, bleibt der 1. Gang eingeschaltet. Die Funktion des Regelventils bezüglich der Regelung des Schaltdruckes $p_k$ für das Betätigen der Kupplung (für den 2. Gang) und des Schmierdruckes $p_s$ entspricht der oben zur Figur 2 beschriebenen. Dabei gelangt das Schmieröl über die Leitung 40 zur Leitung 79. Während die Kupplung für den 2. Gang im Sinne des Einschaltens über die Leitung 87 beaufschlagt wird, wird die Kupplung für den 1. Gang über die vor dem Regelventil von der Leitung 86 abzweigende Leitung 76 im Sinne des Ausschaltens beaufschlagt. Da der Leitung 76 beim Umschalten des Zweiwege-Ventils 82 sofort Öl zufließt, der Schaltdruck $p_k$ für die Kupplung 6 aber erst aufgebaut werden muß, wird die Kupplung 12 für den 1. Gang schnell geöffnet und die Kupplung 6 für den 2. Gang langsamer geschlossen.

Sinkt der Druck $p_p$ des von der Pumpe geförderten Öls unter einen bestimmten Wert, bei dem der zum Einschalten der Kupplung 6 für den 2. Gang erforderliche Druck $p_k$ so niedrig würde, daß diese Kupplung rutschen würde, dann schiebt die Feder 91 des sogenannten Abschaltventils 80 den Kolben 90 gegen den abgesunkenen Druck $p_p$ nach links im Sinne der Figur 4 und schaltet damit das Zweiwege-Ventil 82 um. Damit ist die Ölzufuhr zur Leitung 86 unterbrochen, der Druck $p_k$ bricht auf den Wert Null zusammen: die Kupplung 6 für den 2. Gang schaltet aus und die Federspeicherkupplung 12 für den 1. Gang schaltet ein. Das Entleeren der Kupplungszylinder erfolgt unmittelbar über das Zweiwege-Ventil 82 und eine Leitung 92, das Abschaltventil und die Leitung 83, 81 stehen über eine Leitung 81' mit dem Ölbehälter 20 in Verbindung. Damit das Einschalten der Kupplung 12 für den 1. Gang langsamer erfolgt als das Öffnen der Kupplung 6 für den 2. Gang, ist in der Leitung 76 ein Rückschlagventil 93 angeordnet mit einem Bypass 94 mit einer Drossel 95. Sobald der Druck $p_p$ wieder so weit ansteigt, daß die Kraft der Feder 91 und der Federraste 49 überwunden werden kann, wird das sogenannte Abschaltventil 80 und damit das Zweiwege-Ventil 82 wieder umgeschaltet, d. h. der 2. Gang wird selbständig wieder eingeschaltet, sofern der Kolben 53 noch mit dem Druck $p_L$ beaufschlagt ist.

Soll vom 2. Gang wieder in den 1. Gang geschaltet werden, wird der Druck $p_L$ vom Kolben 53 weggenommen. Die Feder 54 im Schaltzylinder 34 drückt den Kolben 53 und damit das Schaltventil 77 in die gezeichnete »Aus«-Stellung. Damit ist die Ölzufuhr zum sogenannten Abschaltventil 80 bzw. zum Zweiwege-Ventil 82 sowie zum Regelventil 25 und damit zu den Kupplungen unterbrochen. Der Druck $p_k$ bricht zusammen, die Kupplung 6 für den 2. Gang schaltet schnell aus und die Kupplung 12 für den 1. Gang schaltet langsamer ein.

Um zu verhindern, daß bei hoher Motordrehzahl vom 2. in den 1. Gang zurückgeschaltet wird ist die oben erwähnte Verriegelungseinrichtung 85 als Übertourungsschutz vorgesehen. Solange im 1. Gang gefahren wird, ist die Einrichtung 85 wirkungslos. Wird in den 2. Gang umgeschaltet, dann schaltet das unter dem Druck $p_p$ in der Leitung 84 befindliche Öl ein Ventil 96 um, das nunmehr die Leitung 88 mit einem Riegelzylinder 97 verbindet: der Kolben 98 des Riegelzylinders 97 wird mit dem Schmierdruck $p_s$ beaufschlagt und drückt gegen die Kraft einer Feder 99 einen Riegel 100 in eine Raste 101 am Schaltventil 77. Der Riegel 100 ist mit einer Federraste 102 in seinen Endlagen arretiert. Würde jetzt der Druck $p_L$ vom Kolben 53 weggenommen, kann das Schaltventil 77 nicht in die »Aus«-Stellung gehen, da es vom Riegel 100 daran gehindert wird. Erst bei sinkender Motordrehzahl überwindet die Feder 99 den geringer werdenden Druck $p_s$ und schiebt den Riegel 100 aus der Raste 101. Jetzt kann das Schaltventil 77 in die »Aus«-Stellung gehen und damit der 1. Gang eingeschaltet werden. Die Leitung 84 ist jetzt drucklos und eine Feder 103 schaltet das Ventil 96 in die Ausgangsstellung zurück.

Selbstverständlich ist auch die Schalteinrichtung nach der Figur 4 bei einem Planetengetriebe anwendbar.

Die Figuren zeigen nur Ausführungsbeispiele, die — bei gleichbleibender Wirkung — noch abgeändert werden können. So kann das Schaltventil 30, 77 z. B. auch elektromagnetisch betätigt werden, beim Anwendungsfall »Planetengetriebe« kann statt der Trennkupplung 3 eine nicht schaltbare Kupplung vorgesehen sein und dafür die Federspeicherkupplung mechanisch ausschaltbar sein, usw.

Begriffsliste

| | |
|---|---|
| 1 | Hydromotor |
| 2 | Getriebe |
| 3 | Trennkupplung |
| 4 | Antriebswelle |
| 5 | Zahnrad |
| 6 | Kupplung für 2. Gang |
| 7 | Zahnrad |
| 8 | Öleinführung |
| 9 | |
| 10 | Ölpumpe |
| 11 | Abtriebswelle |
| 12 | Kupplung für 1. Gang |
| 13 }<br>14 } | Zahnrad |
| 15 | Öleinführung |
| 16 }<br>17 } | Flansch |
| 18 | Haltebremse |
| 19 | |
| 20 | Ölbehälter |
| 21 | Leitung |
| 22 | Filter |
| 23, 23′ | Leitung |
| 24 | Leitung |
| 25 | Regelventil |
| 26 | Leitung |
| 27 | Abschaltventil |
| 28 | Filter |
| 29 | Überdruckventil |
| 30 | Schaltventil |
| 31 | Leitung |
| 32 | Drosselstelle |
| 33 | Leitung |
| 34 | Schaltzylinder |
| 35 | Leitung |
| 36 }<br>37 } | Bohrung |
| 38 | Leitung |
| 39 | Drossel |
| 40 | Leitung |
| 41 }<br>42 } | Bohrung |
| 43 | Leitung |
| 44 | Überdruckventil |
| 45 }<br>46 } | Leitung |
| 47 | Druckventil |
| 48 | Kolben |
| 49 | Federraste |
| 50 | Feder |
| 51 | Kolben |
| 52 | Feder |
| 53 | Kolben |
| 54 | Feder |
| 55 | Kolben |
| 60 | Planetengetriebe |
| 61 | Antriebswelle |
| 62 | Gehäuse |
| 63 | Öleinführung |
| 64 | Kupplung für 2. Gang |
| 65 | Sonnenrad |
| 66 | Planetenrad |
| 67 | Zahnkranz |
| 68 | Planetenträger |
| 69 | Zahnrad |
| 70 | Kupplung für 1. Gang |
| 71 | Abtriebswelle |
| 72 | Zahnrad |
| 73 | Bohrung |
| 74 | Leitung |
| 75 | Bohrung |
| 76 | Leitung |
| 77 | Schaltventil |
| 78 }<br>79 } | Leitung |
| 80 | Abschaltventil |
| 81, 81′ | Leitung |
| 82 | Zweiwege-Ventil |
| 83 }<br>84 } | Leitung |
| 85 | Verriegelungseinrichtung |
| 86 }<br>87 }<br>88 } | Leitung |
| 89 | Rückschlagventil |
| 90 | Kolben |
| 91 | Feder |
| 92 | Leitung |
| 93 | Rückschlagventil |
| 94 | Bypass |
| 95 | Drossel |
| 96 | Ventil |
| 97 | Riegelzylinder |
| 98 | Kolben |

99 Feder
100 Riegel
101 Raste
102 Federraste
103 |
104 | Feder
$p_d$ Differenzdruck
$p_L$ Druckluft oder Drucköl zum Schalten
$p_k$ Druck für die Kupplungsbetätigung
$p_p$ Druck hinter der Pumpe
$p_s$ Schmierdruck

## Patentansprüche

1. Schalteinrichtung für ein von einem Hydromotor (1) angetriebenes lastschaltbares Zweigang-Getriebe (2), insbesondere für Mobilbagger und ähnliche Baumaschinen, mit zwei über hydraulisch beaufschlagbare Reibungskupplungen (6, 12) wechselweise zu- und abschaltbaren Getriebestufen, mit einer in konstanter Abhängigkeit von der Drehzahl des Hydromotors (1) angetriebenen Ölpumpe (10) zur Versorgung des Getriebes mit Druck- und Schmieröl, und mit einem Regelventil (25) zum Aufbau des erforderlichen Öldruckes, gekennzeichnet durch folgende Merkmale:

a) die Reibungskupplung (12) für den 1. Gang ist als im Einschaltsinn wirkende Federspeicherkupplung ausgebildet;

b) die Druckölzufuhr im Sinne des Einschaltens zur Reibungskupplung (6) für den 2. Gang erfolgt mittels einer einzigen Leitung unter gleichzeitiger Druckölzufuhr im Sinne des Ausschaltens zur Reibungskupplung (12) für den 1. Gang über ein von außen betätigbares Schaltventil (30; 77);

c) ein federbelastetes Abschaltventil (27; 80) verhindert bei zu geringem Öldruck und eingeschaltetem 1. Gang ein Einschalten der Reibungskupplung (6) für den 2. Gang und bewirkt bei zu geringem Öldruck und eingeschaltetem 2. Gang ein Umschalten in den 1. Gang.

2. Schalteinrichtung nach Anspruch 1, dadurch gekennzeichnet, daß das Abschaltventil (27; 80) in seinen Endlagen mittels Federrasten (49) od. dgl. arretiert ist.

3. Schalteinrichtung nach Anspruch 1 oder 2, dadurch gekennzeichnet, daß beim Schalten vom 1. in den 2. Gang die Reibungskupplung (12) für den 1. Gang schnell öffnet und die Reibungskupplung (6) für den 2. Gang langsam schließt, und daß beim Schalten vom 2. in den 1. Gang die Reibungskupplung (6) für den 2. Gang schnell öffnet und die Reibungskupplung (12) für den 1. Gang langsam schließt.

4. Schalteinrichtung nach Anspruch 1, 2 oder 3, dadurch gekennzeichnet, daß das Abschaltventil (80) und das Regelventil (25) hinter dem Schaltventil (77) angeordnet sind.

5. Schalteinrichtung nach Anspruch 4, dadurch gekennzeichnet, daß das von der Ölpumpe (10) bei eingeschaltetem 1. Gang geförderte Öl über das Schaltventil (77) ganz dem Schmierölkreislauf zugeführt wird.

6. Schalteinrichtung nach mindestens einem der Ansprüche 1 bis 5, dadurch gekennzeichnet, daß das Schaltventil (77) in Schaltstellung 2. Gang in Abhängigkeit von der Pumpendrehzahl verriegelt ist.

## Claims

1. Shifting means for a two-speed transmission (2) which is shiftable under load and driven by a hydromotor (1), particularly for mobile excavators and dredgers and similar construction machines, comprising two transmission stages, which are adapted to be connected to and disconnected by means of hydraulically operable friction clutches (6, 12), an oil pump (10), which is driven in constant dependence on the speed of the hydrometer (1) and serves to supply hydraulic oil and lubricating oil to the transmission, and a regulating valve (25) for maintaining the required oil pressure, characterized by the following features:

a) The friction clutch (12) for the first-speed mechanism consists of an energy storage spring clutch which is biased in an engaging sense;

b) the supply of hydraulic oil for engaging the friction clutch (6) for the second-speed mechanism is effected by means of a single line in conjunction with a simultaneous supply of hydraulic coil for disengaging the friction clutch (12) for the first-speed mechanism by means of an externally operable shift valve (30; 77);

c) a spring-loaded disconnecting valve (27; 80) is provided, which prevents an engagement of the friction clutch (6) for the second-speed mechanism when the oil pressure is too low and the first-speed mechanism is operative and which effects a shift to the first-speed mechanism when the oil pressure is too low and the second-speed mechanism is operative.

2. Shifting means according to claim 1, characterized in that the disconnecting valve (27, 80) is locked in its end positions by means of detent springs (49) or the like.

3. Shifting means according to claim 1 or 2, characterized in that for a shift from the first-speed mechanism to the second-speed mechanism the friction clutch (12) for the first-speed mechanism is disengaged quickly and the friction clutch (6) for the second-speed mechanism is slowly engaged, and that for a shift from the second-speed mechanism to the first-speed mechanism the friction clutch (6) for the second-speed mechanism is disengaged quickly and the friction clutch (12) for the first-speed mechanism is slowly engaged.

4. Shifting means according to claim 1, 2 or 3, characterized in that the disconnecting valve (80) and the regulating valve (25) are arranged behind the shift valve (77).

5. Shifting means according to claim 4, characterized in that the oil discharged by the oil pump (10) when the first-speed mechanism is operative is entirely fed through the shift valve (77) to the lubricating oil circulating system.

6. Shifting means according to at least one of claim 1 to 5, characterized in that in the shift position for the second-speed mechanism the shift valve (77) is locked in dependence on the pump speed.

## Revendications

1. Dispositif de changement de vitesses pour transmission (2) à deux vitesses, à changement en charge, entraîné par un moteur hydraulique (1), notamment pour pelle excavatrice mobile et des engins de chantiers analogues, avec deux étages de transmission pouvant être alternativement enclenchés et déclenchés par l'intermédiaire d'accouplements à friction (6, 12) actionnés hydrauliquement, avec une pompe à huile (10), entraînée en relation constante avec la vitesse de rotation du moteur hydraulique (1), pour alimenter la transmission avec de l'huile sous pression et de l'huile de lubrification, et avec une soupape de régulation (25) pour établir la pression d'huile nécessaire, dispositif caractérisé en ce que:

a) l'accouplement à friction (12) pour la première vitesse revêt la forme d'un accouplement à ressort accumulateur agissant dans le sens de l'enclenchement,

b) l'alimentation en huile sous pression, dans le sens de l'enclenchement, de l'accouplement à friction (6) pour la seconde vitesse, s'effectue au moyen d'une canalisation unique en amenant simultanément de l'huile sous pression dans le sens du déclenchement à l'accouplement à friction (12) pour la première vitesse par l'intermédiaire d'une soupape de commutation (30, 77) susceptible d'être actionnée de l'extérieur,

c) une soupape de déclenchement (27, 80), sollicitée par un ressort, empêche lorsque la pression d'huile est trop faible et que la première vitesse est enclenchée, un enclenchement de l'accouplement à friction (6) pour la seconde vitesse, et cette soupape assure, lorsque la pression d'huile est trop faible et que la seconde vitesse est enclenchée, une commutation sur la première vitesse.

2. Dispositif de changement de vitesses selon la revendication 1, caractérisé en ce que la soupape de déclenchement (27, 80) est bloquée dans ses positions terminales au moyen d'encliquetages à ressort (49), ou au moyen d'organes analogues.

3. Dispositif de changement de vitesses selon la revendication 1 ou 2, caractérisé en ce que lors de la commutation de la première sur la seconde vitesse, l'accouplement à friction (12) pour la première vitesse s'ouvre rapidement, tandis que l'accouplement à friction (6) pour la seconde vitesse se ferme lentement, alors que pour la commutation de la seconde sur la première vitesse, l'accouplement à friction (6) pour la seconde vitesse s'ouvre rapidement, tandis que l'accouplement à friction (12) pour la première vitesse se ferme lentement.

4. Dispositif de changement de vitesses selon la revendication 1, 2 ou 3, caractérisé en ce que la soupape de déclenchement (80) et la soupape de régulation (25) sont disposées derrière la soupape de commutation (77).

5. Dispositif de changement de vitesses selon la revendication 4, caractérisé en ce que l'huile refoulée par la pompe à huile (10) lorsque la première vitesse est enclenchée, est amenée en totalité au circuit d'huile de lubrification par l'intermédiaire de la soupape de commutation (77).

6. Dispositif de changement de vitesses selon au moins une des revendications 1 à 5 caractérisé en ce que la soupape de commutation (77) est verrouillée dans la position de commutation deuxième vitesse en fonction de la vitesse de rotation de la pompe.

**Fig. 1**

Fig. 2

Fig. 3

# Fig. 4.